# EUROPEAN PATENT APPLICATION

(11) **EP 3 621 346 A1**
(43) Date of publication of application: **11.03.2020**
(21) Application number: 17908263.1
(22) Date of filing: 02.05.2017
(51) Int. Cl.: H04W 28/06, H04W 72/04, H04W 92/20

(54) **BASE STATION AND CONFIGURATION INFORMATION TRANSMISSION METHOD**

(71) Applicant: NTT DOCOMO, INC., Chiyoda-ku Tokyo 100-6150 (JP)
(72) Inventor: YASUKAWA, Shinpei, Tokyo 100-6150 (JP); NAGATA, Satoshi, Tokyo 100-6150 (JP); TAKEDA, Kazuki, Tokyo 100-6150 (JP); GUO, Shaozhen, Beijing 100190 (CN); WANG, Lihui, Beijing 100190 (CN); HOU, Xiaolin, Beijing 100190 (CN)
(74) Representative: Hoffmann Eitle
(86) International application number: PCT/JP2017/017315
(87) International publication number: WO 2018/203416

(57) **Abstract**

Disclosed is a base station used as a first base station in a radio communication system having the first base station and a second base station. The base station includes a determination unit configured to determine a transmission direction configuration in a time segment having predetermined duration, and a configuration information transmission unit configured to periodically or aperiodically transmit information indicating the transmission direction configuration determined by the determination unit to the second base station.

## Description

### TECHNICAL FIELD

The present invention relates to a base station in a radio communication system.

### BACKGROUND ART

Next generation communication standards (5G or NR) of LTE (Long-Term Evolution) and LTE-Advanced have been discussed in 3GPP (Third Generation Partnership Project). In the NR system, a flexible duplex that flexibly controls resources used for downlink (DL) communication and uplink (UL) communication is being studied in accordance with generated downlink (DL) traffic and uplink (UL) traffic. As a flexible duplex, there is, for example, a TDD (Time Division Duplex) system (hereinafter referred to as "dynamic TDD") that dynamically switches UL resource and DL resource in time domain.

Typically, it is assumed that the bias between the DL traffic and the UL traffic is greater for small cells than for large cells. Therefore, it is possible to accommodate traffic more efficiently by controlling DL communication and UL communication independently using dynamic TDD in each cell.

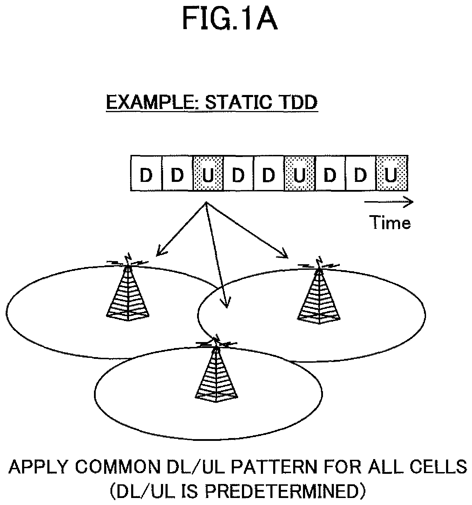

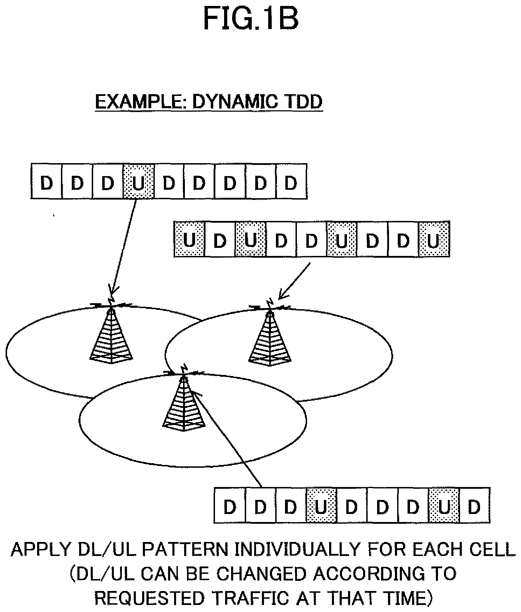

In dynamic TDD, transmission directions of DL and UL are dynamically changed at certain time intervals such as subframe, slot, mini-slot, etc. That is, as illustrated in FIG. 1A, in static TDD applied in the LTE, a preconfigured DL/UL configuration common to the cells is used. In dynamic TDD, as illustrated in FIG. 1B, a separate DL/UL configuration is individually applied for each cell. For dynamic TDD, the DL/UL configuration is semi-static or flexible.

### RELATED ART DOCUMENT

### [NON-PATENT DOCUMENT]

[NON-PATENT DOCUMENT 1] 3GPP TS 36.211 V14.0.0

### SUMMARY OF THE INVENTION

### PROBLEM TO BE SOLVED BY THE INVENTION

However, as described above, when a system of individually applying a DL/UL configuration to each cell is adopted, DL communication in a certain cell (serving cell) may, for example, be interfered with by UL communication in another cell (interfering cell), disabling a user apparatus in the serving cell to properly receive a signal from a base station. In addition, UL communication in a certain cell (serving cell) may, for example, be interfered with by DL communication in another cell (interfering cell), disabling a base station in the serving cell to properly receive a signal from a user apparatus.

In order to minimize such an adverse effect, each base station may be configured to determine a DL/UL configuration of a reference cell (covered by the corresponding base station) by transmitting and receiving a DL/UL configuration between the base stations so as to minimize interference received from other cells or to minimize interference given to other cells. However, in the existing technology such as existing LTE, there is no specific technology for transmitting and receiving a UL/DL configuration (transmission direction configuration).

The present invention has been made in light of the above points, and it is an object of the present invention to provide a technology enabling a base station to indicate a transmission direction configuration to another base station.

### MEANS FOR SOLVING THE PROBLEM

According to a disclosed technology, a base station used as a first base station in a radio communication system including the first base station and a second base station is provided. The base station includes a determination unit configured to determine a transmission direction configuration in a time segment having predetermined duration; and a configuration information transmission unit configured to periodically or aperiodically transmit information indicating the transmission direction configuration determined by the determination unit to the second base station.

### ADVANTAGEOUS EFFECT OF THE PRESENT INVENTION

According to the disclosed technology, a technology for enabling a base station to indicate a transmission direction configuration to another base station is provided.

### BRIEF DESCRIPTION OF THE DRAWINGS

FIG. 1A is a diagram illustrating static TDD;
FIG. 1B is a diagram illustrating dynamic TDD;
FIG. 2 is a diagram illustrating a radio communication system according to an embodiment of the present invention;
FIG. 3A is a diagram illustrating an example of a DL/UL pattern in dynamic TDD;
FIG. 3B is a diagram illustrating an example of a DL/UL pattern in dynamic TDD;
FIG. 3C is a diagram illustrating an example of a DL/UL pattern in dynamic TDD;
FIG. 4 is a diagram illustrating an example of a frame configuration of a dynamic TDD;
FIG. 5A is a diagram illustrating a scenario 1;
FIG. 5B is a diagram illustrating a scenario 2;
FIG. 5C is a diagram illustrating a scenario 3;
FIG. 6A is a diagram illustrating an example of a parameter;
FIG. 6B is a diagram illustrating an example of a parameter;
FIG. 6C is a diagram illustrating an example of a parameter;
FIG. 7A is a diagram illustrating an example of an indication trigger;
FIG. 7B is a diagram illustrating an example of an indication trigger;
FIG. 8A is a diagram illustrating an example of indication information in an embodiment 2-1;
FIG. 8B is a diagram illustrating an example of indication information in the embodiment 2-1;
FIG. 9 is a diagram illustrating an example of indication information in the embodiment 2-1;
FIG. 10 is a diagram illustrating an embodiment 2-2;
FIG. 11 is a diagram illustrating an example of indication information in the embodiment 2-2;
FIG. 12 is a diagram illustrating an example of indication information in the embodiment 2-2;
FIG. 13A is a diagram illustrating an example of indication information in the embodiment 2-2;
FIG. 13B is a diagram illustrating an example of indication information in the embodiment 2-2;
FIG. 14 is a diagram illustrating an example of indication information in the embodiment 2-2;
FIG. 15 is a diagram illustrating an example of indication information in the embodiment 2-2;
FIG. 16 is a diagram illustrating an example of indication information in the embodiment 2-2;
FIG. 17 is a diagram illustrating an example of indication information in the embodiment 2-2;
FIG. 18 is a diagram illustrating an example of indication information in the embodiment 2-2;
FIG. 19 is a diagram illustrating an example of indication information in the embodiment 2-2;
FIG. 20 is a diagram illustrating an example of indication information in an embodiment 2-3;
FIG. 21A is a diagram illustrating an example of indication information in the embodiment 2-3;
FIG. 21B is a diagram illustrating an example of indication information in the embodiment 2-3;
FIG. 22A is a diagram illustrating an example of indication information in an embodiment 3;
FIG. 22B is a diagram illustrating an example of indication information in the embodiment 3;
FIG. 23A is a diagram illustrating an example of indication information in a modification 1;
FIG. 23B is a diagram illustrating an example of a beam in the modification 1;
FIG. 24 is a diagram illustrating an example of a system configuration in an modification 2;
FIG. 25 is a diagram illustrating an example of a functional configuration of a base station 200;
FIG. 26 is a diagram illustrating an example of a functional configuration of a CU 400; and
FIG. 27 is a diagram illustrating an example of a hardware configuration of a user apparatus 100 and a base station 200.

### EMBODIMENTS FOR CARRYING OUT THE INVENTION

The following describes embodiments of the present invention (present embodiments) with reference to the accompanying drawings. Note that the embodiments described below are merely examples and the embodiments to which the present invention is applied are not limited to the following embodiments.

It is assumed that a radio communication system of the present embodiment supports at least an LTE communication system. Therefore, when the radio communication system operates, the existing technology prescribed in the existing LTE may be used where appropriate. However, the existing technology is not limited to LTE. In addition, "LTE" used in this specification shall have a broad meaning including LTE-Advanced and systems beyond LTE-Advanced unless otherwise specified. The present invention may also be applied to communication systems other than LTE.

### CONFIGURATION OF RADIO COMMUNICATION SYSTEM

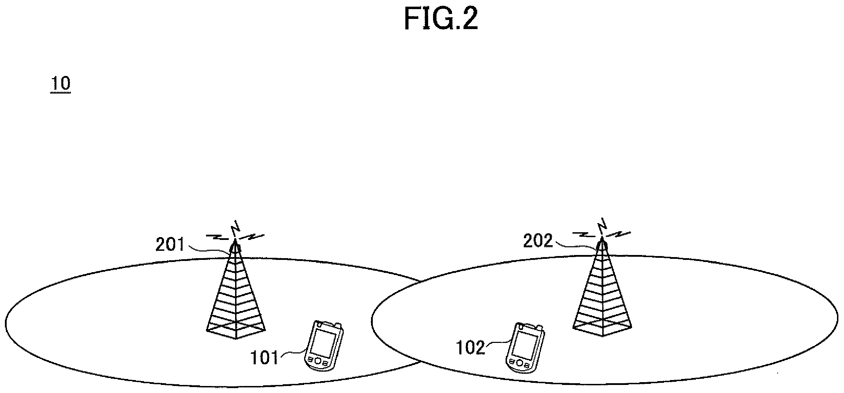

FIG. 2 is a configuration diagram of a radio communication system 10 according to the present embodiment. As illustrated in FIG. 2, the radio communication system 10 according to the present embodiment includes user apparatuses 101 and 102 (hereinafter collectively referred to as a user apparatus 100) and base stations 201 and 202 (hereinafter collectively referred to as a base station 200). In the following embodiments, the radio communication system 10 supports dynamic TDD that is enabled to control UL and DL individually for each cell.

The user apparatus 100 is any one of suitable communication devices having a radio communication function such as a smartphone, a mobile phone, a tablet, a wearable terminal, a communication module for M2M (Machine-to-Machine). The user apparatus 100 wirelessly connects to the base station 200 and uses various communication services provided by the radio communication system 10.

The base station 200 is a communication device that provides one or more cells and performs radio communication with the user apparatus 100. In FIG. 2, two base stations 201 and 202 are illustrated as examples; however, in general, a large number of base stations 200 are arranged to cover a service area of the radio communication system 10.

Further, a signal waveform used for both uplink and downlink in the radio communication system of the present embodiment may be an OFDMA waveform similar to the downlink of the existing LTE, may be a SC-FDMA/OFDMA waveform similar to uplink/downlink of existing LTE, or may be a signal waveform other than those described above.

The base station 201 and the base station 202 are connected by a communication line (called a backhaul), and information may be transmitted and received between the base station 201 and the base station 202.

### CONFIGURATION OF DYNAMIC TDD

As described above, dynamic TDD is used in the present embodiment; a configuration example of the dynamic TDD is illustrated below.

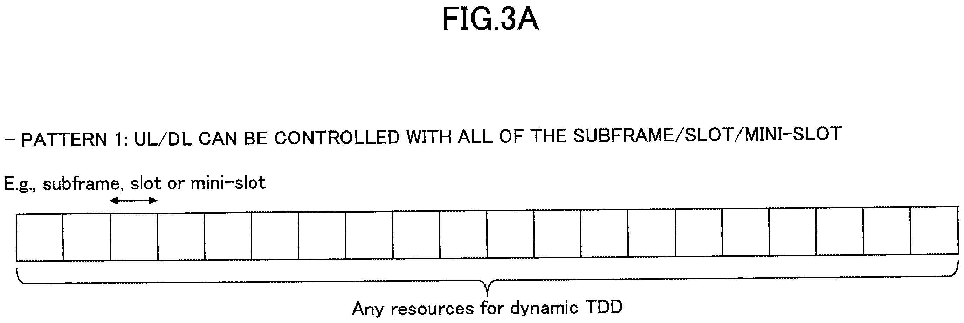

In the dynamic TDD according to the present embodiment, for example, UL communication and DL communication are performed according to several UL/DL patterns as illustrated in FIGS. 3A to 3C. However, the configuration of the dynamic TDD is not limited to these examples.

In pattern 1 of FIG. 3A, UL communication/DL communication may be performed in all time intervals. Note that the "time interval" herein indicates a time width (a width described as "e.g., subframe, slot or Mini-slot") of one rectangular frame in FIG. 3A (the same applies to B and C). This "time interval" may be referred to as TTI.

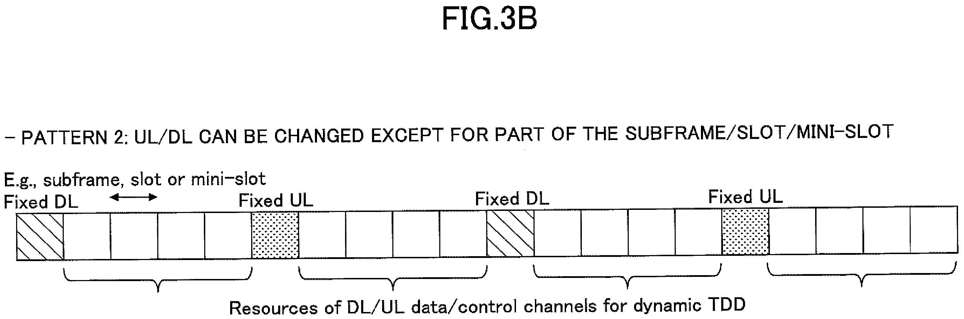

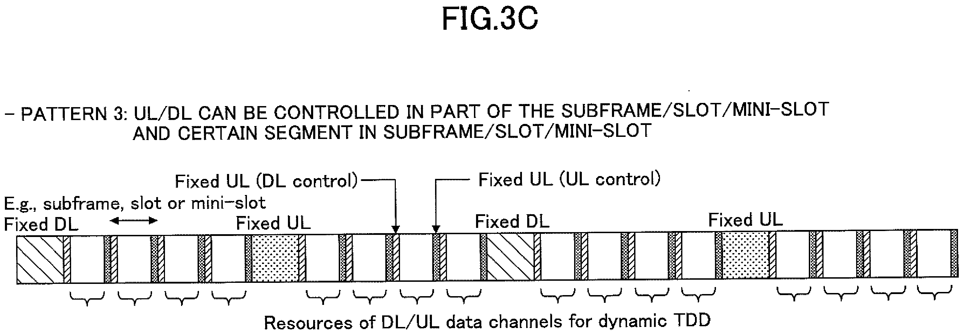

In pattern 2 illustrated in FIG. 3B, the setting of the UL/DL transmission direction is fixed in some time intervals, and only the set communication direction is allowed in those time intervals. In other time intervals, the UL/DL communication may be performed by switching the UL/DL. In pattern 3 illustrated in FIG. 3C, the setting of the UL/DL is fixed in some of the time intervals and a certain segment within a time interval (in the illustrated example, both end segments within the time interval are fixed for DL and UL), and only the set transmission direction is allowed in the above time intervals. The UL communication/DL communication is allowed in other time intervals.

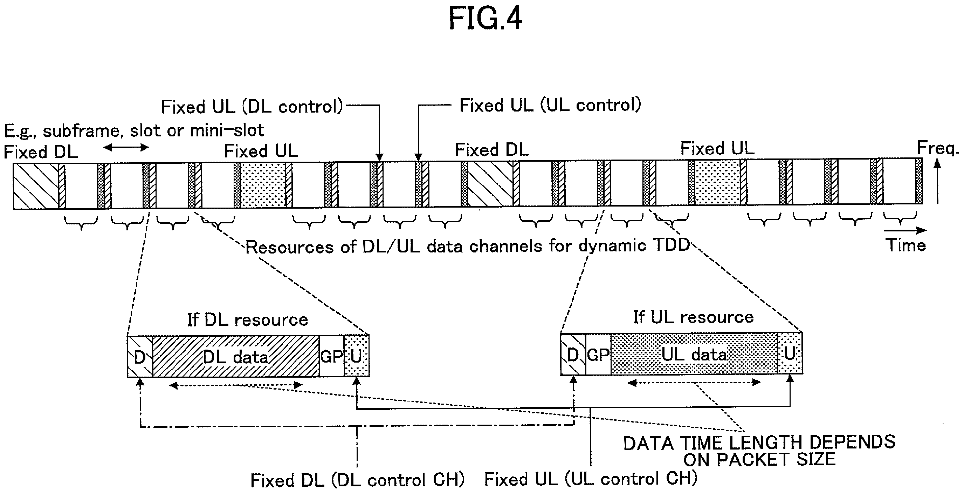

FIG. 4 is a diagram illustrating a frame configuration according to the pattern 3 illustrated in FIG. 3C in more detail. Hereinafter, the above-mentioned "time interval" is referred to as a slot for convenience. Note that the "slot" used below may be replaced with TTI (transmission time interval), unit duration frame, subframe, and mini-slot. The duration of the slot may be of fixed duration or a lime length that does not change with the lapse of time, or may be of duration that changes according to packet size or the like.

As illustrated in FIG. 4, in this example, one slot may include a head time segment (DL control channel segment) for the downlink control channel, a time segment (data segment) for data communication, and an end time segment (UL control channel segment) for the uplink control channel. Transmission may be enabled with a slot configuration composed only of required channels having the head time segment (DL control channel segment) for the downlink control channel, and the time segment (data segment) for data communication. A guard period (GP) for switching is provided at the boundary between DL and UL.

### EXAMPLE OF UL/DL TRANSMISSION DIRECTION CONFIGURATION SCENARIO

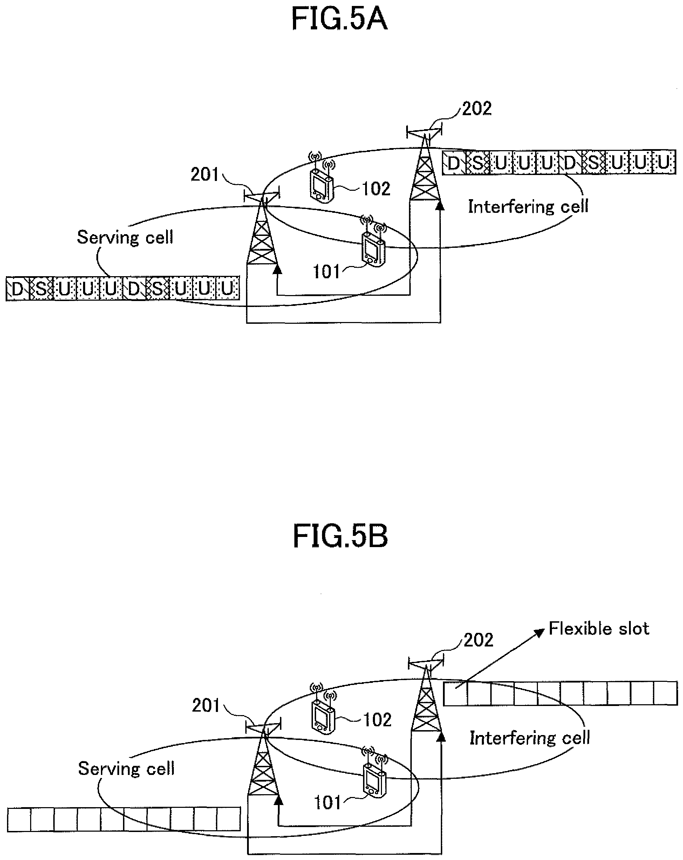

Next, an example of a scenario of UL/DL transmission direction configuration will be described with reference to FIGS. 5A to 5C. Note that FIGS. 5A to 5C illustrate examples in which the cell under the base station 201 is a serving cell and the cell under the base station 202 is an interference cell with respect to the serving cell. Note that this is an example viewed from the base station 201. In viewing from the base station 202, the cell under the base station 201 becomes an interference cell.

FIG. 5A illustrates a scenario 1. In scenario 1, both the base station 201 of the serving cell and the base station 202 of the interfering cell semi-statically change the UL/DL transmission direction configuration.

FIG. 5B illustrates a scenario 2. In scenario 2, both the base station 201 of the serving cell and the base station 202 of the interfering cell adopt a flexible configuration capable of changing the UL/DL transmission direction configuration on a per slot basis.

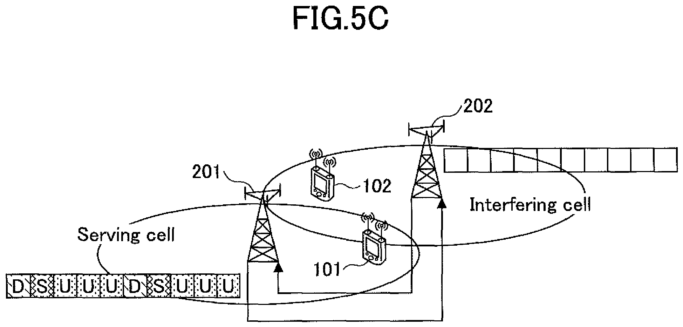

FIG. 5C illustrates a scenario 3. In scenario 3, the base station 201 of the serving cell semi-statically changes the UL/DL transmission direction configuration, and the base station 202 of the interfering cell flexibly changes the UL/DL transmission direction configuration.

In the present specification, unless otherwise specified, "to semi-statically change the UL/DL transmission direction configuration" means to change the UL/DL transmission direction configuration on a per radio frame (1 Duration) basis described later. Further, in this specification, "to flexibly change the UL/DL transmission direction configuration" means to change the UL/DL transmission direction configuration by a unit (e.g., on a per 1-slot basis) smaller than by a radio frame (1 Duration) described later.

### EMBODIMENT 1: INDICATION METHOD OF UL/DL TRANSMISSION

### DIRECTION CONFIGURATION

In the present embodiment, the UL/DL transmission direction configuration is transmitted and received (exchanged) between the base stations. For example, the base station 201 in the radio communication system of the embodiment illustrated in FIG. 2 indicates (transmits) a UL/DL transmission direction configuration in a reference cell covered by the base station 201 itself to a plurality of base stations including the base station 202. Further, the base station 202 indicates a UL/DL transmission direction configuration in a reference cell covered by the base station 202 itself to a plurality of base stations including the base station 201.

In order to clarify the description, the following description focuses on the indication of the UL/DL transmission direction configuration from the base station 201 to the base station 202. In the embodiments 1, 2 and 3, and modifications 1 and 2, the base station 201 determines a UL/DL transmission direction configuration before the base station 201 indicates information indicating the UL/DL transmission direction configuration to the base station 202. The phrase "the base station 201 determines the UL/DL transmission direction configuration", for example, indicates that the base station 201 itself determines the UL/DL transmission direction configuration based on the amount of UL/DL traffic, the amount of interference from other cells, and the like. Further, the phrase "the base station 201 determines the UL/DL transmission direction configuration" also includes a case where the base station 201 receives the UL/DL transmission direction configuration used by the base station 201 from the other devices.

In the present embodiment, there are periodic indication and aperiodic indication as methods for the base station 201 to indicate the UL/DL transmission direction configuration to the base station 202. The following illustrates each of the periodic indication and aperiodic indication.

### PERIODIC INDICATION

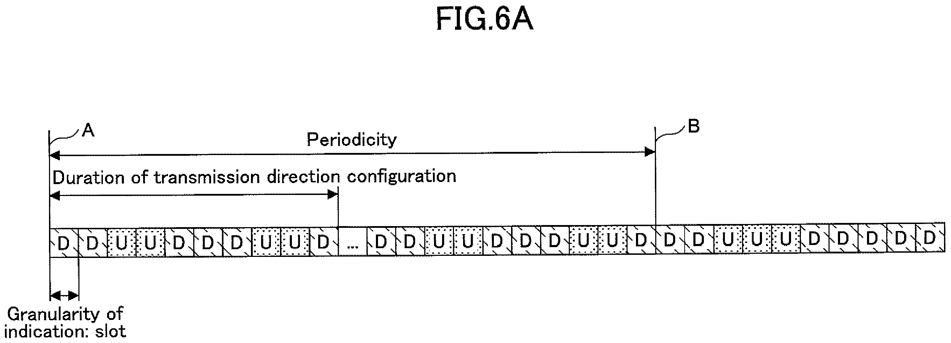

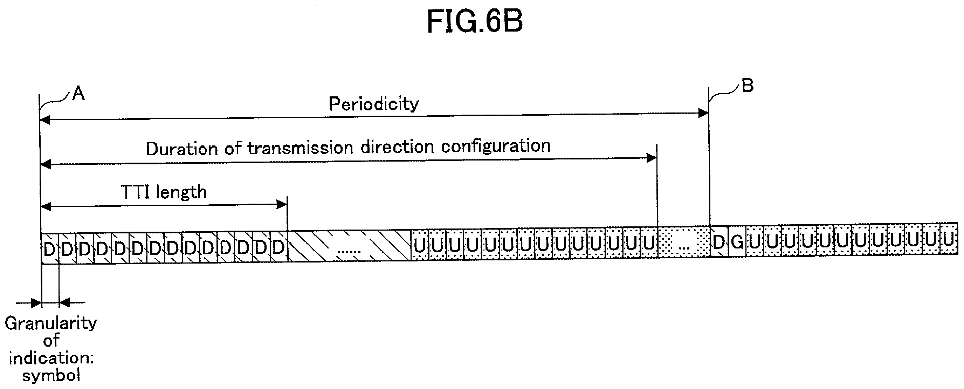

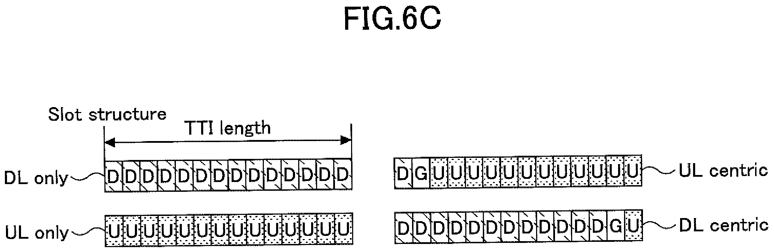

In the periodic indication, the base station 201 indicates a UL/DL transmission direction configuration to the base station 202 at a certain periodicity (periodicity). FIGS. 6A, 6B and 6C are diagrams illustrating parameters used in the periodic indication.

FIG. 6A illustrates an example where granularity of the indication of the UL/DL transmission direction configuration is a slot. In the example of FIG. 6A, an indication period corresponds to duration indicated by "Duration of transmission direction configuration (hereinafter referred to as 'Duration')", in which the UL/DL transmission direction configuration is repeated a plurality of times (integer number of times). Note that a value preconfigured from the upper layer is used for duration of UL/DL transmission direction configuration and duration of a period, for example.

Within one period, the same UL/DL transmission direction configuration (duration: 1 Duration) is repeated. In the present embodiment, the same UL/DL transmission direction configuration (duration: 1 Duration) is repeated unless there is a change in the UL/DL transmission direction irrespective of the periodic indication/aperiodic indication. This "1 Duration" is referred to as a "radio frame". Note that this "radio frame" differs from the radio frame defined in the existing LTE. Alternatively, this "radio frame" may be the same as the radio frame defined in the existing LTE.

It is assumed that slots constituting a radio frame may be referred to with numbers. For example, in a case where a radio frame is composed of 10 slots, the time position of the slot within the radio frame may be specified by designating the slot number (e.g., slot #5).

In the example of FIG. 6A, for example, in a semi-static change, the base station 201 indicates a UL/DL transmission direction configuration of the radio frame used in a period A to B to the base station 202, at a predetermined time before a point in time indicated by A. In the example of FIG. 6A, for example, in a flexible change, the base station 201 indicates a slot number changed from that in the previous period and a UL/DL transmission direction configuration (UL or DL) of the slot in the radio frame used in the period A to B to the base station 202, at a predetermined time before a point in time indicated by A. Specific indication methods will be described in detail later.

The base station 201 may indicate the UL/DL transmission direction configuration irrespective of whether the UL/DL transmission direction configuration being changed every time the period arrives, or the base station 201 may indicate the UL/DL transmission direction configuration only when the period arrives and the UL/DL transmission direction configuration is changed.

FIG. 6B illustrates an example where granularity of the indication of the UL/DL transmission direction configuration is a symbol. In the example of FIG. 6B, an indication period corresponds to a time length in which the radio frame is repeated a plurality of times (integer number of times), the radio frame being the duration indicated by "Duration of transmission direction configuration". It is assumed that symbols may be referred to with numbers. For example, in a case where a radio frame is composed of 10 slots, and one slot is composed of 14 symbols, the time position of the symbol within the radio frame may be specified by designating the slot number and the symbol number (e.g., symbol #3 of the slot #5).

In the example of FIG. 6B, for example, in a semi-static change, the base station 201 indicates a UL/DL transmission direction configuration of the radio frame used in a period A to B to the base station 202, at a predetermined time before a point in time indicated by A. In the example of FIG. 6B, for example, in a flexible change, the base station 201 indicates the slot number and the symbol number changed with respect to the previous period and a UL/DL transmission direction configuration (UL or DL) of the symbol in the radio frame used in the period A to B to the base station 202, at a predetermined time before a point in time indicated by A.

As illustrated in FIG. 6C, a TTI length and a TTI structure are predetermined. In the example of FIG. 6C, the TTI length is 14 symbols; and, as the TTI structure, DL only, UL only, DL centric, and UL centric are defined. With respect to the TTI length and TTI structure, each base station may determine the TTI length and TTI structure used in the cell that the base station covers and indicate these information pieces together with the UL/DL transmission direction configuration to other base stations; or the TTI length and the TTI structure may be determined in advance based on the specifications or the like in the entire radio system so as not to indicate the TTI length and the TTI structure to other base stations.

### APERIODIC INDICATION

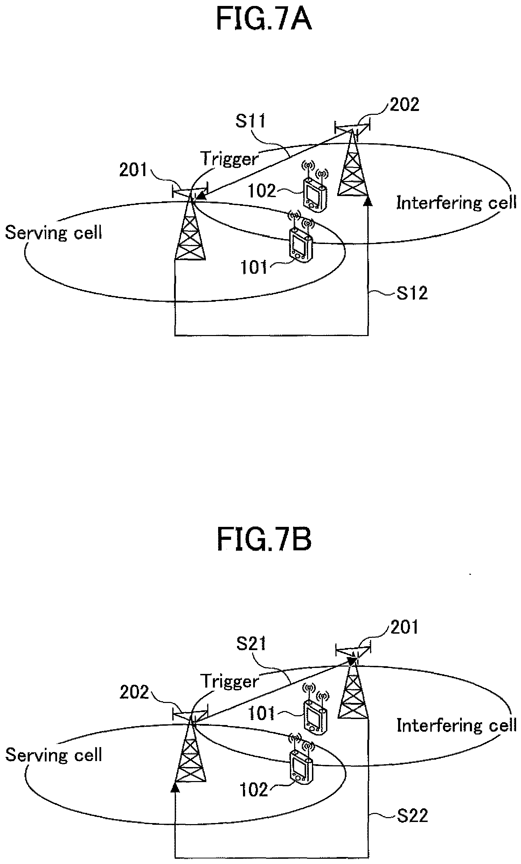

Aperiodic indication is to indicate the UL/DL transmission direction configuration based on a predetermined trigger. An example of a trigger will be described with reference to FIGS. 7A and 7B.

In FIG. 7A, in a case where the base station 202 of the interfering cell changes a change setting of the UL/DL transmission direction configuration of the base station 202 itself from semi-static to flexible, the base station 202 transmits an indication trigger to the base station 201 (i.e., requests the indication) in order to identify a DL/UL transmission direction configuration of the adjacent base station 201 (step S11). Then, based on the request, the base station 201 indicates the DL/UL transmission direction configuration to the base station 202 (step S12).

In the example of FIG. 7B, in a case where the serving cell under the control of the base station 202 receives strong interference from the interference cell under the control of the base station 201, the base station 202 transmits indication trigger (i.e., requests indication) to the base station 201 in order to identify the UL/DL transmission direction configuration in the cell of the base station 201 (step S21). Then, based on the request, the base station 201 indicates the DL/UL transmission direction configuration to the base station 202 (step S22).

Note that the trigger for the base station 201 to perform aperiodic indication is not limited to requests from other base stations. For example, the aperiodic indication includes indication of a changed UL/DL transmission direction configuration from the base station 201 to the base station 202 with an event that the base station 201 has determined to change the UL/DL transmission direction configuration as a trigger. For example, in a case where the base station 201 determines to change the UL/DL transmission direction configuration of a certain slot from UL to DL, the base station 201 indicates the UL/DL transmission direction configuration of the slot to the base station 202 before the slot to be changed arrives.

Hereinafter, an embodiment 2, an embodiment 3, and a modification 1 will be described as specific examples of indication contents in a case where the base station 201 indicates the UL/DL transmission direction configuration to the base station 202.

### EMBODIMENT 2

In the embodiment 2, the base station 201 indicates to the base station 202 the UL/DL transmission directions all for entirety of the time period with the granularity to be used. The embodiment 2 is composed of embodiment 2-1, embodiment 2-2, and embodiment 2-3, each of which will be described below. In the following description, the granularity of the UL/DL transmission direction configuration to be indicated is a slot; however, this is an example, and the same operation may be achieved with other granularity (e.g., symbol). For example, the following operation may be applied even if the radio frame (1 Duration) in the following description is replaced with a slot and a slot in the following description is replaced with a symbol.

### EMBODIMENT 2-1

In an embodiment 2-1, the UL/DL transmission direction configuration of the radio frame is semi-statically changed. The embodiment 2-1 includes option 1 and option 2.

### OPTION 1 OF EMBODIMENT 2-1

In option 1, the UL/DL transmission direction configuration of the radio frame is associated with a number. For example, in a case where the base station 201 indicates the UL/DL transmission direction configuration corresponding to "4" to the base station 202, the base station 201 transmits a bit string corresponding to "4" to the base station 202. This method has the advantage of the overhead being small.

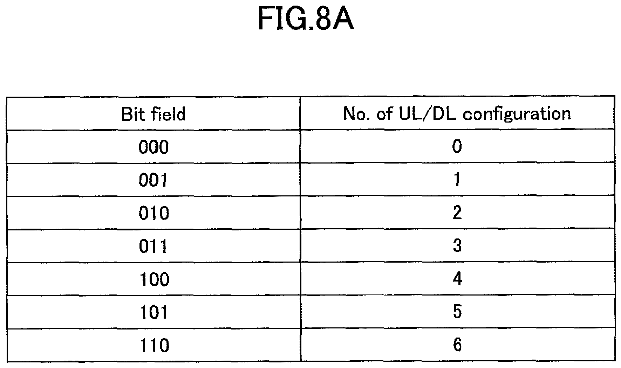

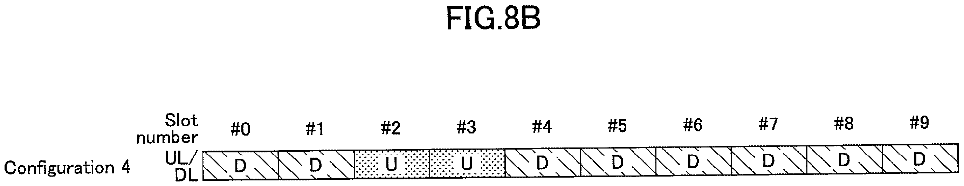

As an example, in a case of using eight types of UL/DL transmission direction configurations, a content of the bit field of the indication is associated with a number indicating a corresponding UL/DL transmission direction configuration, as illustrated in FIG. 8A. For example, as illustrated in FIG. 8B, in a case of indicating "No. 4" of the UL/DL transmission direction configuration (configuration 4), the base station 201 transmits "100" to the base station 202.

In option 1, the number of UL/DL transmission direction configurations that may be indicated depends on the number of bits that may be used for indication. For example, when N types of UL/DL transmission direction configuration are used, the number of bits corresponding to "the smallest integer greater than or equal to log₂(N)" is required in order to indicate a specific UL/DL transmission direction configuration.

### OPTION 2 OF EMBODIMENT 2-1

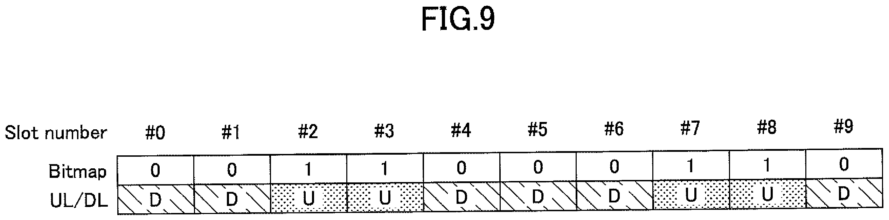

In option 2 of Embodiment 2-1, a bitmap is used for indication of the UL/DL transmission direction configuration. For example, when the base station 201 indicates the UL/DL transmission direction configuration of K slot length to the base station 202, a bitmap of K bit length is used. For example, 0 in the bitmap indicates DL, and 1 indicates UL. FIG. 9 illustrates an example of a bitmap in a case of K = 10.

In option 2, the UL/DL transmission direction configuration may be flexibly changed compared to option 1, but the overhead is larger than option 1.

### EMBODIMENT 2-2

In an embodiment 2-2, indication of a flexible UL/DL transmission direction configuration is made on a per slot basis or on a per multiple-slot basis. Note that a case where duration of "multiple slots" in "multiple units for slots" is equal to the radio frame corresponds to the embodiment 2-1. It is assumed that the duration of "multiple slots" in the embodiment 2-2 is shorter than the duration of the radio frame.

### EMBODIMENT 2-2: INDICATION ON A PER SLOT BASIS

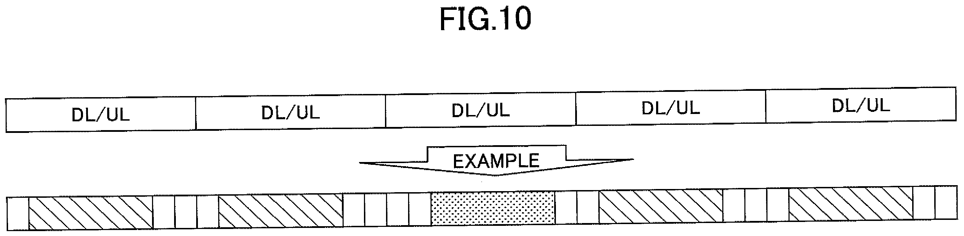

First, an example of indicating the UL/DL transmission direction on a per slot basis will be described. In this case, for example, as illustrated in FIG. 10, when the base station 201 changes the transmission direction of a certain slot in the radio frame, the changed content of the slot (UL/DL transmission direction configuration (i.e., UL or DL after change)) is indicated to the base station 202. Hereinafter, options 1, 2, and 3 will be described as specific examples of the indication methods, but indication timing will be described beforehand. It is assumed that the following timing description is based on "indication on a per slot basis in the embodiment 2-2"; however, the following timing description may also be applied to the embodiment other than the embodiment based on the "indication on a per slot basis in the embodiment 2-2".

### INDICATION TIMING

In order for the base station 201 to indicate the change content in a certain slot to the base station 202, it is necessary to identify the slot in the base station 202.

In a case where the base stations are synchronized and the slots (e.g., the slot #1 of the radio frame #3) identified by the base stations at a certain absolute time are also the same, and TS denotes a start time (absolute time) of a slot subject to indication, D denotes a propagation delay time between base stations, P denotes a processing time (e.g., the processing time for identifying that the transmission direction in an adjacent base station is changed in a certain slot) of a received end of the indication, the base station 201 performs indication to the base station 202 at time "TS-D-P". The base station 202 having received the indication is enabled to identify the transmission direction at the adjacent base station in the slot starting from the TS, based on the time of receiving the indication.

Further, when such synchronization between the base stations is not predetermined as described above, a reference time (e.g., UTC) and a radio frame number etc., at the reference time may be exchanged between base stations. As a result, the base station 202 having received the change content of the UL/DL transmission direction configuration of a certain slot at a certain time from the other base station 201 may be enabled to identify the slot corresponding to the change content based on information such as reference time or the like at the base station 201.

The base station 201 may also indicate timing offset or slot number, together with the UL/DL transmission direction configuration to the base station 202. The timing offset indicates a time lag of the radio frame between the base stations.

Further, in a case where the base stations are synchronized (having common synchronization) but the reference time is unknown between the base stations, the base station 201 may indicate the timing offset or the slot number together with the reference time to the base station 202.

### EMBODIMENT 2-2: OPTION 1 FOR INDICATION ON A PER SLOT BASIS

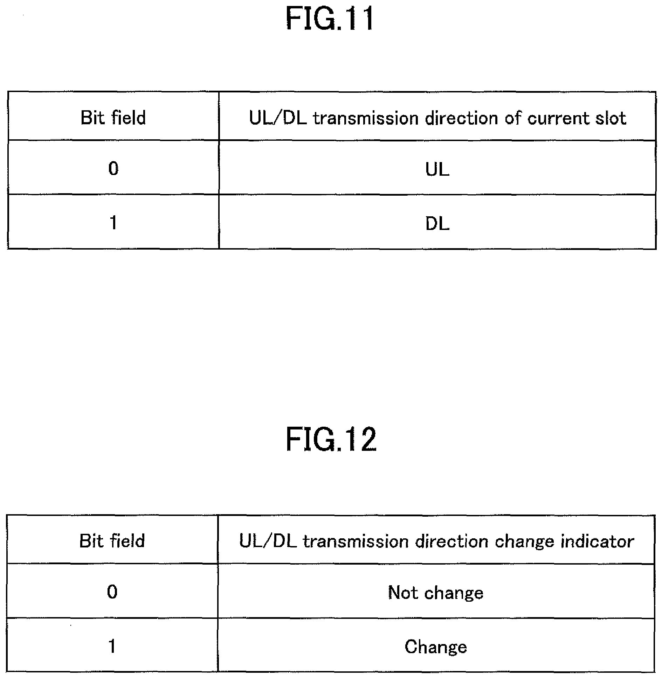

In option 1, the base station 201 transmits a transmission direction indicator for the slot subject of indication to the base station 202. For example, as illustrated in FIG. 11, when 0 is defined as UL and 1 is defined as DL, the base station 201 transmits "0" (or "1") to the base station 202 at the timing corresponding to a slot (e.g., TS-D-P described above) at the time of indicating to the base station 202 that the transmission direction of the slot is UL (or DL). In this method, when indicating the transmission directions for all the slots, the receiving end may easily identify the UL/DL despite the fact that the overhead becomes large.

In a case where the default transmission direction is determined as DL in advance, and when the base station 201 changes the transmission direction in a certain slot from DL to UL, the base station 201 transmits a transmission direction indicator (any one bit) for the slot to the base station 202.

In such a case, for example, when the transmission direction of the slot remains UL at a next Duration subsequent to the Duration related to the above indication, the base station 201 similarly transmits a transmission direction indicator (any one bit) for the slot to the base station 202. Further, when the transmission direction of the slot is returned to the default (DL) at the next Duration, the base station 201 does not indicate the transmission direction indicator for the slot. The above-described operation will be repeatedly performed.

Further, in a case where the default transmission direction is determined as UL in advance, and the base station 201 changes the transmission direction in a certain slot from UL to DL, the base station 201 transmits the transmission direction indicator (any one bit) for the slot to the base station 202.

In such a case, for example, when the transmission direction of the slot remains DL at a next Duration subsequent to the Duration related to the above indication, the base station 201 similarly transmits a transmission direction indicator (any one bit) for the slot to the base station 202. Further, when the transmission direction of the slot is returned to the default (UL) at the next Duration, the base station 201 will not indicate the transmission direction indicator for the slot to the base station 202. The above-described operation will be repeatedly performed.

### EMBODIMENT 2-2: OPTION 2 FOR INDICATION ON A PER SLOT BASIS

In option 2, the base station 201 transmits a transmission direction change indicator for the slot subject to indication to the base station 202. For example, as illustrated in FIG. 12, 0 may be defined in advance as "no change" ("Not change") and 1 may be defined in advance as "changed" ("Change").

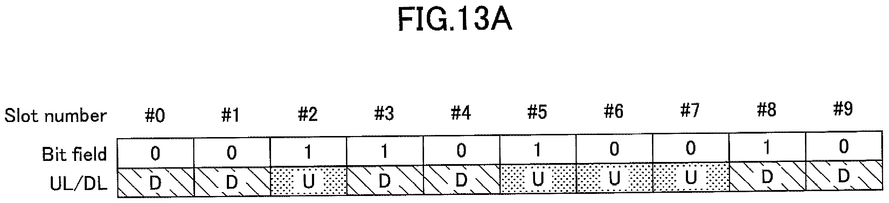

In a case where the default initial transmission direction is determined as DL in advance, and the base station 201 changes the transmission direction in a certain slot from DL to UL, the base station 201 transmits a transmission direction change indicator ("1" indicating "Change") for the slot to the base station 202. When there is no change in the transmission direction in a subsequent Duration with respect to the corresponding slot, the base station 201 does not transmit the transmission direction change indicator for the corresponding slot. Alternatively, when there is no change in the transmission direction in a subsequent Duration with respect to the corresponding slot, the base station 201 may transmit the transmission direction change indicator indicating "no change" ("Not change") for the corresponding slot. FIG. 13A is a diagram illustrating an example of transmission of a transmission direction change indicator in each slot, where "0" in the bit field indicates that there is no change in the transmission direction from the previous Duration, and "1" in the bit field indicates that there has been a change in the transmission direction from the previous Duration.

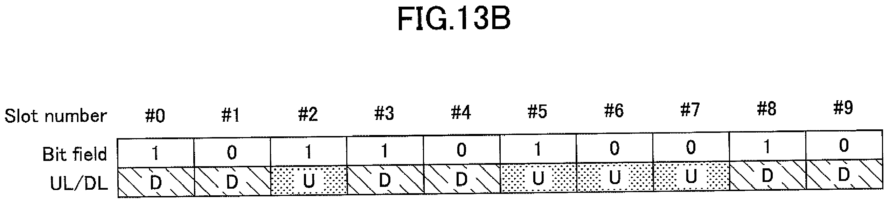

In a case where the default initial transmission direction is determined as UL in advance, and the base station 201 changes the transmission direction in a certain slot from UL to DL, the base station 201 may transmit a transmission direction change indicator ("1" indicating "Change") for the slot to the base station 202. When there is no change in the transmission direction in a subsequent Duration with respect to the corresponding slot, the base station 201 does not transmit the transmission direction change indicator for the corresponding slot. Alternatively, when there is no change in the transmission direction in a subsequent Duration with respect to the corresponding slot, the base station 201 may transmit the transmission direction change indicator indicating "no change" ("Not change") for the corresponding slot. FIG. 13B is a diagram illustrating an example of transmission of a transmission direction change indicator in each slot, where "0" in the bit field indicates that there is no change in the transmission direction from the previous Duration, and "1" in the bit field indicates that there has been a change in the transmission direction from the previous Duration.

The "initial" in the above-described initial transmission direction may be determined as any definition. For example, "a starting point (or a point before starting) in an initial Duration of a period (e.g., "Periodicity" in FIGS. 6A and 6B) obtained by multiplying Duration by an integer may be defined as the "initial" in the initial transmission direction described above.

### EMBODIMENT 2-2: OPTION 3 FOR INDICATION ON A PER SLOT BASIS

In option 3, the base station 201 transmits an initial UL/DL transmit direction indicator and a transmission direction change indicator for slot subject to indication to the base station 202.

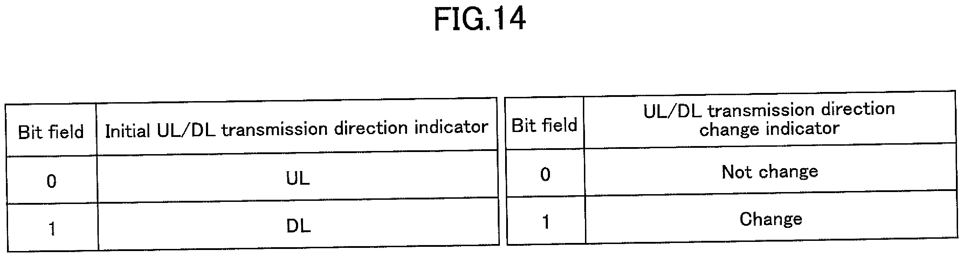

For example, as illustrated in FIG. 14, as the initial UL/DL transmission direction indicator, "0" is defined as UL in advance and "1" is defined as DL in advance. In addition, 0 is defined as "no change" ("Not change") in advance, and 1 is defined as "changed" ("Change") in advance.

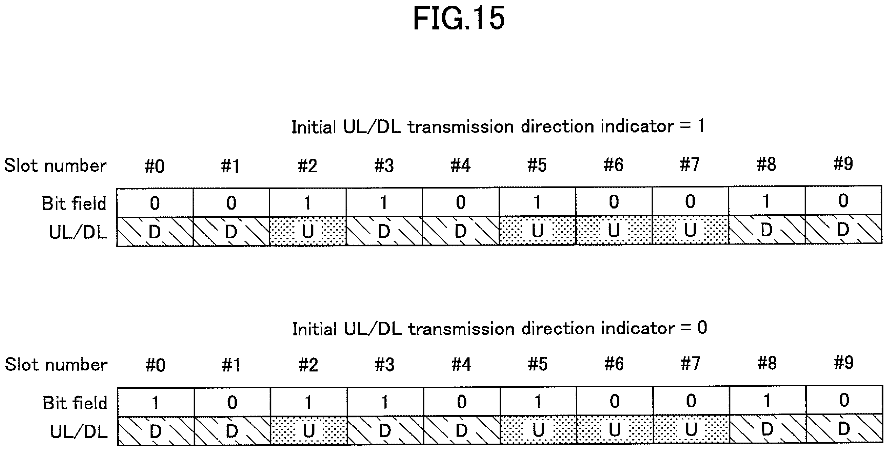

When the base station 201 uses DL as the initial UL/DL transmission direction, and the base station 201 changes the transmission direction in a certain slot from DL to UL, the base station 201 transmits the initial UL/DL transmission direction indicator = 1 (indicating DL) with the transmission direction change indicator ("1" indicating "Change") for the slot to the base station 202. When there is no change in the transmission direction in a subsequent Duration with respect to the corresponding slot, the base station 201 does not transmit the transmission direction change indicator for the corresponding slot. Alternatively, when there is no change in the transmission direction in a subsequent Duration with respect to the corresponding slot, the base station 201 may transmit the initial UL/DL transmission direction indicator = 1 (indicating DL) and the transmission direction change indicator indicating "no change" ("Not change") for the corresponding slot. The same operation is performed when UL is used as the initial UL/DL transmission direction. FIG. 15 is a diagram illustrating two examples (initial UL/DL transmission direction indicator = 1 and = 0) in a case of transmitting the initial UL/DL transmission direction indicator and the transmission direction change indicator in each slot, where "0" in the bit field indicates that there is no change in the transmission direction from the previous Duration, and "1" in the bit field indicates that there has been a change in the transmission direction from the previous Duration.

Note that transmission of the initial UL/DL transmission direction indicator is not necessarily performed for each slot subject to indication. For example, transmission of the initial UL/DL transmission direction indicator may be performed at the initial time point of a certain period corresponding to "initial".

The "initial" in the above-described initial UL/DL transmission direction may be determined as any definition. For example, "a starting point (or a point before starting) in an initial Duration of a period (e.g., "Periodicity" in FIGS. 6A and 6B) obtained by multiplying Duration by an integer may be defined as the "initial" in the initial UL/DL transmission direction described above.

### EMBODIMENT 2-2: INDICATION BY MULTIPLE SLOT UNITS

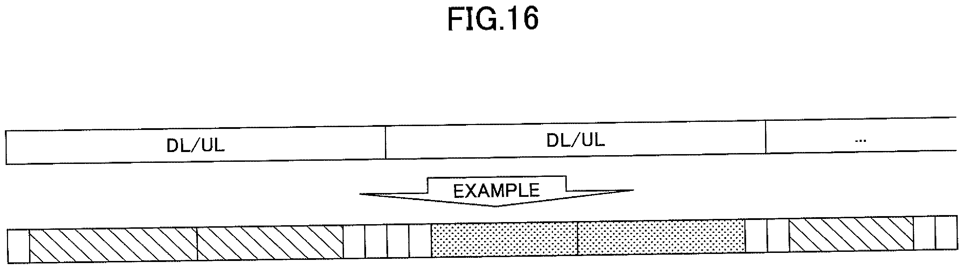

Next, an example of indicating a UL/DL transmission direction configuration by the multiple units for slot will be described. In this case, for example, as illustrated in FIG. 16, when the base station 201 changes the transmission direction of consecutive slots (two slots in the example of FIG. 16), the base station 201 indicates the change contents of the plurality of slots to the base station 202. The following illustrates a specific example of an indication method.

The base station 201 transmits multiple bits indicating "start position and end position (starting/end position) and a transmission direction (UL/DL transmission direction)" in the plurality of slots to the base station 202. Note that the start position in the "start position and end position" indicates a slot corresponding to the timing of performing indication ("slot n" as described below). Thus, the "start position and end position" indicate the number of slots subject to indication.

As an example, one bit out of the plurality of bits is used for indication of the transmission direction, and the remaining bits indicate "start position and end position".

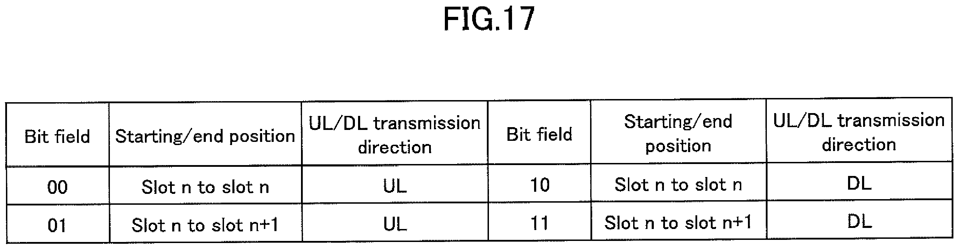

FIG. 17 illustrates an example of bits used for indication when the transmission direction is using from 1 to 2 units for slots. As illustrated in FIG. 17, 2 bits are used in this case. The first 1 bit out of 2 bits indicates UL (when the first bit = 0) or DL (when the first bit = 1). The next bit out of the 2 bits indicates the "start position and end position".

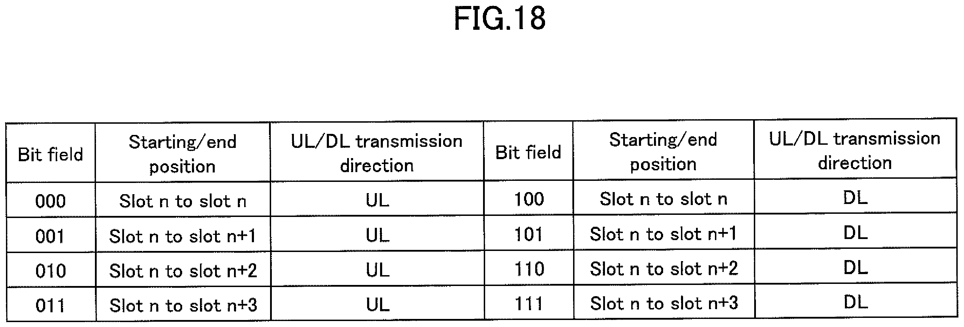

FIG. 18 illustrates an example of bits used for indication when the transmission direction is using from 1 to 3 units for slots. As illustrated in FIG. 18, 3 bits are used in this case. The first 1 bit of 3 bits indicates UL (when the first bit = 0) or DL (when the first bit = 1). The next 2 bits out of 3 bits indicate "start position and end position" (slots n to n, slots n to n + 1, slots n to n + 2, or slots n to n + 3).

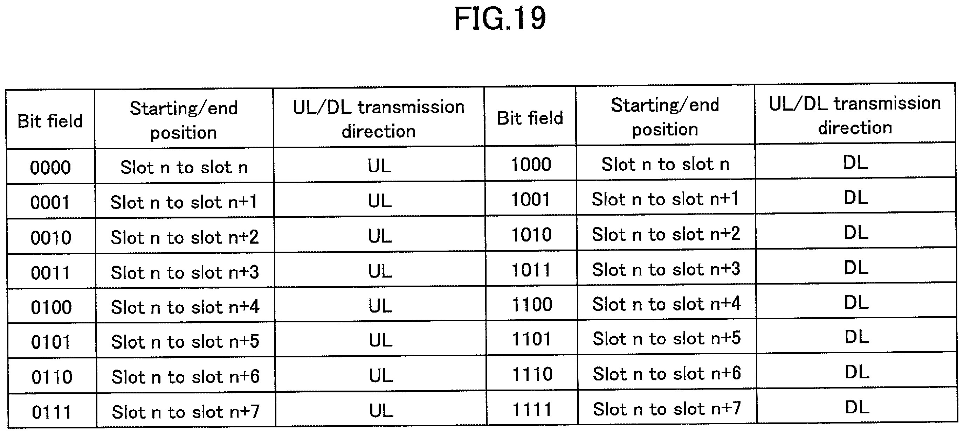

FIG. 19 illustrates an example of bits used for indication when the transmission direction is using from 1 to 4 units for slots. As illustrated in FIG. 19, 4 bits are used in this case. The first 1 bit of 4 bits indicates UL (when the first bit = 0) or DL (when the first bit = 1). The next 3 bits out of the 4 bits indicate the "start position and end position" (slot n to n, slot n to n + 1, slot n to n + 2 or slot n to n + 3, slot n to n + 4, slot n to n + 5, slot n to n + 6, or slot n to n + 7).

### EMBODIMENT 2-3

The following describes an embodiment 2-3. In the embodiment 2-3, one radio frame includes one or more slots that are semi-statically changed and one or more slots that are flexibly changed. Hereinafter, options 1 and 2 of the embodiment 2-3 will be described. It is assumed that the "semi-static" in the embodiment 2-3 is set in advance and remains substantially fixed.

Here, a semi-static part represents a part that is semi-statically changed in one radio frame, and a flexible part represents a part that is flexibly changed in one radio frame.

### OPTION 1 OF EMBODIMENT 2-3

In option 1, a plurality of types of UL/DL transmission direction configurations in the flexible part of one radio frame are determined in advance, and numbers are respectively associated with the respective types of the UL/DL transmission direction configurations. Then, when the base station 201 determines to change the UL/DL transmission direction configuration of the flexible part, the base station 201 transmits a number (bit string) corresponding to the UL/DL transmission direction configuration of the changed flexible part to the base station 202 before the first slot of the changed flexible part starts.

When N slots are allocated as a flexible part, the maximum number of UL/DL transmission direction configurations of the flexible part is 2^{N}. In order to indicate 2^{N} types of configurations, log₂(2^{N}) = N bits are required.

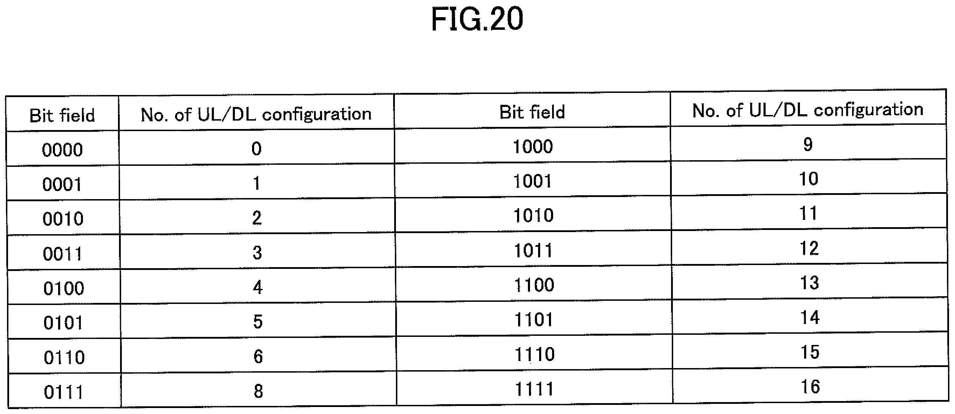

FIG. 20 is a diagram illustrating an example in a case where 4 slots are allocated as a flexible part. In the case of 4 slots being allocated as a flexible part, 4 bits are used as transmission information (bit field). For example, "0010" in FIG. 20 corresponds to "No. 2" of the UL/DL transmission direction configuration.

In option 1, multiple slots of the flexible part may be consecutive or not consecutive. Information on which slot corresponds to the flexible part may be included in the information of the UL/DL transmission direction configuration that is defined in advance.

### OPTION 2 OF EMBODIMENT 2-3

In option 2, the base station 201 uses a bitmap to indicate the UL/DL transmission direction configuration of the flexible part.

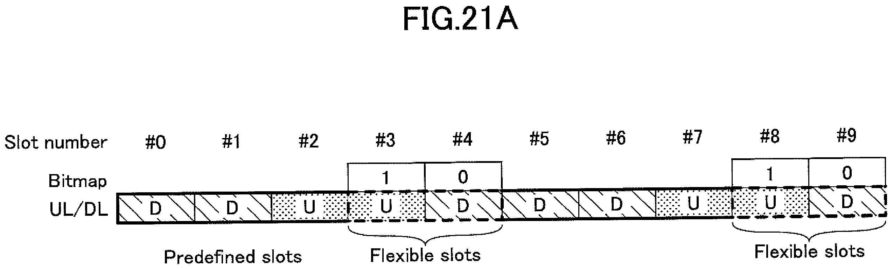

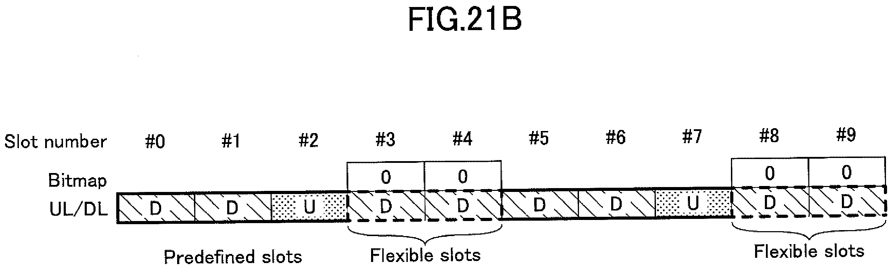

When N slots are allocated as a flexible part, a bitmap of N bit length is used for indicating the UL/DL transmission direction configuration of the flexible part. FIGS. 21A and 21B illustrate examples of bitmaps in a case where the flexible part has 4 slots. In this case, "1" indicates UL and "0" indicates DL.

In both FIGS. 21A and 21B, the slots #3, #4, #8, and #9 correspond to the flexible part. For example, the base station 201 may indicate the slot numbers (#3, #4, #8, and #9) constituting the flexible part to the base station 202 in advance. Thereafter, for example, when the base station 201 changes the transmission direction of at least one slot of the flexible part, the base station 201 transmits a 4-bit bitmap corresponding to the changed flexible part to the base station 202 before the flexible part including the changed slot starts.

In addition, the base station 201 may indicate the bit value to the base station 202 at a timing corresponding to each slot for every bit of the bitmap in a same manner as the indication on a per slot basis in the embodiment 2-1.

### EMBODIMENT 3

The following describes an embodiment 3. In the embodiment 3, the base station 201 partially indicates the UL/DL transmission direction configuration to the base station 202. The partial indication of the UL/DL transmission direction configuration may, for example, include indicating UL or DL for a certain slot and indicating only whether fixed or flexible for other slots. Hereinafter, options 1 and 3 of the embodiment 3 will be described.

### OPTION 1 OF EMBODIMENT 3

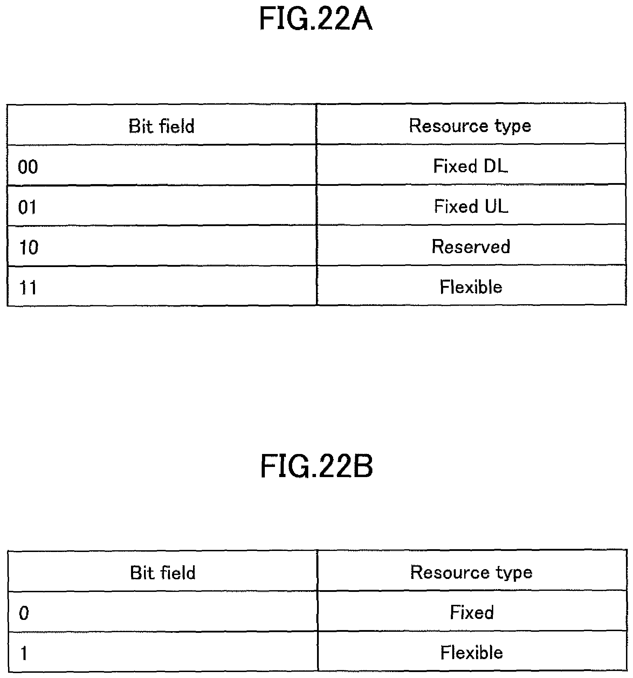

In option 1, the base station 201 indicates a resource type to the base station 202 on a per slot basis. FIG. 22A illustrates an example of a resource type and corresponding transmission information (bit field). As illustrated in FIG. 22A, in option 1, resource types include DL fixed (Fixed DL), UL fixed (Fixed UL), reserved resource (Reserved), or flexible (Flexible). Further, as illustrated in FIG. 22B, "fixed" or "flexible" may be indicated as a resource type without indicating UL/DL.

For example, the base station 201 may indicate the resource types of all the slots of one radio frame at the timing of performing the indication (e.g., periodically, trigger from another base station, or configuration change), or may indicate the resource type of only some of the slots.

### OPTION 2 OF EMBODIMENT 3

In option 2, the default of the resource type of the slot is defined as "flexible" in advance. Then, with respect to only slots with the DL fixed, UL fixed, or the reserved/blank resource, the base station 201 indicates the resource type to the base station 202 at the timing of performing indication (e.g., periodically, trigger from another base station, or configuration change).

### OPTION 3 OF EMBODIMENT 3

In option 3, the default of the resource type of the slot is defined as "fixed" in advance. Then, with respect to only flexible slots, the base station 201 indicates the resource type to the base station 202 at the timing of performing indication (e.g., periodically, trigger from another base station, or configuration change).

### MODIFICATION 1

The following describes a modification 1. The modification 1 may be applicable to any of the embodiments 1 to 3 described above.

In the modification 1, the base station 201 indicates to the base station 202 a beam indication identifying not only the UL/DL transmission direction but also identifying the direction of the beam (analog beam) to be used, for each slot (TTI).

For example, in a case where N beams are usable, the number of bits corresponding to "the smallest integer greater than or equal to log₂(N)" is required to indicate a specific beam.

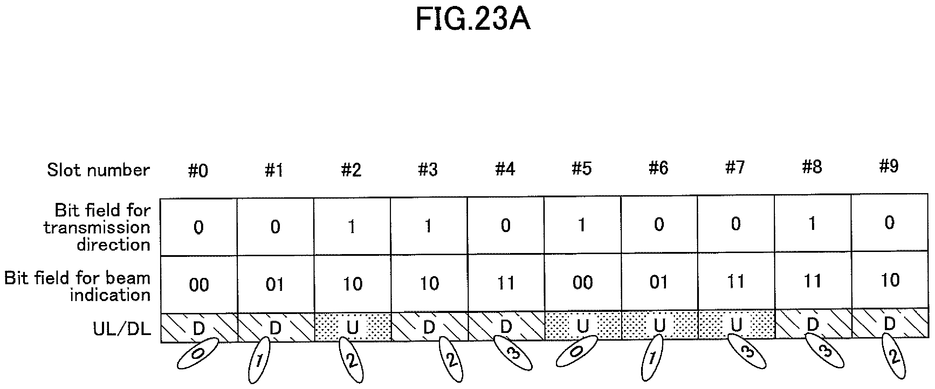

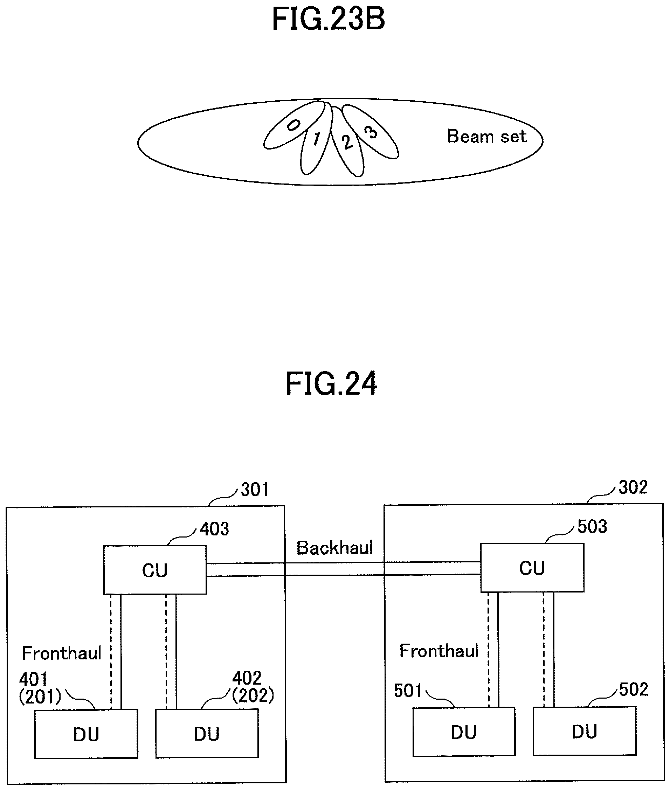

FIG. 23A illustrates an example of information transmitted from the base station 201 to the base station 202 in a case where four beams are used (an image is illustrated in FIG. 23B). For example, in base station 201, a slot #3 is UL and a beam 2 is used; hence, with respect to the slot #3, the base station 201 transmits "1" indicating the transmission direction and "10" indicating the beam to the base station 202.

Note that for a given indication timing, in a case where the DL/UL transmission direction for a certain slot does not change from the previous indication timing and only the beam direction is changed, the beam direction may only be indicated without indicating the DL/UL transmission direction.

### MODIFICATION 2

The following describes a modification 2. The modification 2 may be applicable to any of the embodiments 1 to 3 and the modification 1 described above.

In the modification 2, in addition to the system configuration illustrated in FIG. 2, each base station may adopt a configuration having a CU (central unit) and a DU (Distribution Unit), as illustrated in FIG. 24. The CU and each DU are connected by an optical fiber or the like; this connection portion is referred to as "fronthaul", and a connection portion between the CUs is referred to as "backhaul". The CU may be referred to as a central aggregating device, and the DU may be referred to as a remote (extension) device. As an example, a DU has a function of a physical layer (PHY) in radio communication, and a CU has a layer function of a MAC layer or higher.

In the example of FIG. 24, the base station 301 has a CU 403, a DU 401, and a DU 402, and the base station 302 has a CU 503, a DU 501, and a DU 502. Note that the base stations 201 and 202 in the system configuration illustrated in FIG. 2 may be DUs. The following describes cases of function sharing with respect to DU and CU. The CU may be referred to as "base station".

### CASE 1

Each DU determines the UL/DL transmission direction and beam direction.

### CASE 2

The CU determines the UL/DL transmission direction of all subordinate DUs, and each DU determines the beam direction.

### CASE 3

The CU determines the UL/DL transmission direction and the beam direction of all subordinate DUs.

The backhaul signaling method from the base station 201 to the base station 202 described in the embodiments 1 to 3 and the modification 1 may be applied to any one of the following signaling including signaling from DU to CU, signaling from CU to DU, signaling between DUs, and signaling between CUs via CU (e.g., signaling from DU 401 to DU 402 in FIG. 24).

In the above examples, instead of indicating whether the transmission direction is fixed or flexible, as to whether a transmission direction is determined (slot having fixed transmission direction, or slot having flexible transmission direction after determination of scheduling) or as to whether a transmission direction is undetermined (slot having flexible transmission direction before determination of scheduling). The latter may be enabled to indicate transmission directions in more slots to other base stations while the former may be enabled to protect important signals/channels such as synchronization signals which would be transmitted in the slot having a fixed transmission direction. Therefore, both pieces of information may be indicated. In this case, transmission direction indication may have a type such as fixed UL, fixed DL, flexible DL, flexible UL, transmission direction undetermined, and the like.

### DEVICE CONFIGURATIONS

The following illustrates an example of a functional configuration of a base station 200 that performs the operations of the above-described embodiment. The base station 200 may have a function capable of executing all the operations of the embodiments 1 to 3 and the modification 1 described above, and a part of the operations of the embodiments 1 to 3 and the modification 1.

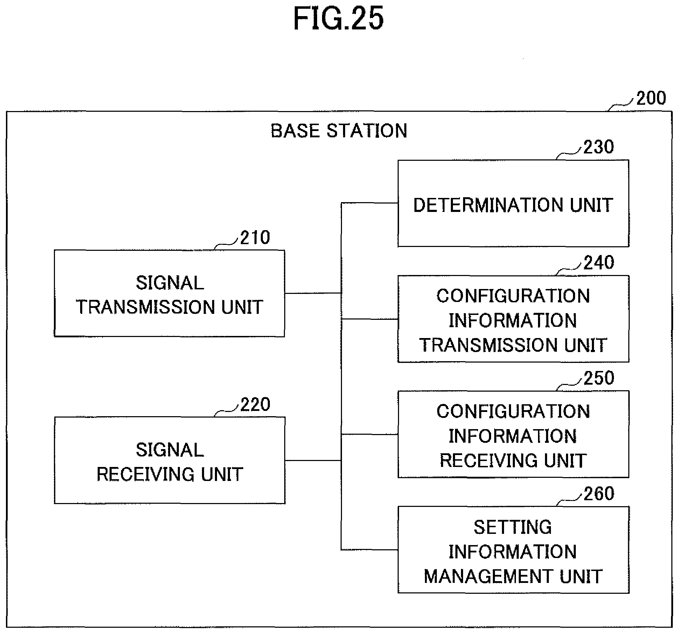

FIG. 25 is a diagram illustrating a functional configuration example of a base station 200. As illustrated in FIG. 25, the base station 200 includes a signal transmission unit 210, a signal receiving unit 220, a determination unit 230, a configuration information transmission unit 240, a configuration information receiving unit 250, and a setting information management unit 260. Note that the base station 200 may be each of the base stations as illustrated in FIG. 2 or may be each of the DUs illustrated in FIG. 24.

The functional configuration illustrated in FIG. 25 is merely an example. Any terms for describing functional classification and functional components may be applied insofar as the operations according to the present embodiment may be executed.

The signal transmission unit 210 is configured to generate signals of a lower layer from information of an upper layer and to transmit the signals by radio. The signal receiving unit 220 is configured to wirelessly receive various signals to acquire information of an upper layer from the received signals.

The determination unit 230 is configured to determine an UL/DL transmission direction configuration on a slot-by-slot basis (on a per slot basis) or on a symbol-by-symbol basis (by the symbol unit), taking into account, for example, the amount of UL/DL traffic and the amount of interference from other cells. In addition, the determination unit 230 is also configured to receive the UL/DL transmission direction configuration by the slot unit or symbol unit from other devices (e.g., MME, network monitoring device, etc.), and use the received UL/DL transmission direction configuration as the UL/DL transmission direction configuration used by the base station 200.

The configuration information transmission unit 240 has a function of transmitting information indicating the UL/DL transmission direction configuration described in the embodiments 1 to 3 and the modifications 1 and 2. The configuration information receiving unit 250 has a function of receiving information indicating the UL/DL transmission direction configuration described in the embodiments 1 to 3 and the modifications 1 and 2. The setting information management unit 260 includes a storage unit configured to store configuration information set in advance. As an example, the setting information management unit 260 stores correspondence information between a predetermined UL/DL transmission direction configuration and a transmission bit string.

For example, the base station 200 may be a base station used as a first base station in a radio communication system including the first base station and a second base station. The determination unit 230 may be configured to determine a transmission direction configuration in a time segment having predetermined duration, and the configuration information transmission unit 240 is configured to periodically or aperiodically transmit information indicating the transmission direction configuration determined by the determination unit 230 to the second base station.

The time segment having the predetermined duration may be a radio frame having a plurality of slots, and the configuration information transmission unit 240 may transmit information on a transmission direction configuration indicating a transmission direction of each slot in the plurality of slots to the second base station as information indicating the transmission direction configuration; or the time segment having the predetermined duration may be a slot having a plurality of symbols, and the configuration information transmission unit 240 may transmit information on a transmission direction configuration indicating a transmission direction of each symbol in the plurality of symbols to the second base station as information indicating the transmission direction configuration.

The time segment having the predetermined duration may be a radio frame having a plurality of slots, and the configuration information transmission unit 240 may transmit information corresponding to a transmission direction of a specific one of slots in the radio frame or transmission directions of a plurality of slots in the radio frame to the second base station as information indicating the transmission direction configuration; or the time segment having the predetermined duration may be a slot having a plurality of symbols, and the configuration information transmission unit 240 may transmit information corresponding to a transmission direction of a specific one of symbols in the slot or transmission directions of a plurality of symbols in the slot to the second base station as information indicating the transmission direction configuration.

The time segment having the predetermined duration may be a radio frame having a plurality of slots, and the configuration information transmission unit 240 may transmit type information of a specific slot or a plurality of slots in the radio frame to the second base station as information indicating the transmission direction configuration; or the time segment having the predetermined duration may be a slot having a plurality of symbols, and the configuration information transmission unit 240 may transmit type information of a specific symbol or a plurality of symbols in the slot to the second base station as information indicating the transmission direction configuration, where the type information may be information indicating that the slot or the symbol has a fixed transmission direction or a flexible transmission direction.

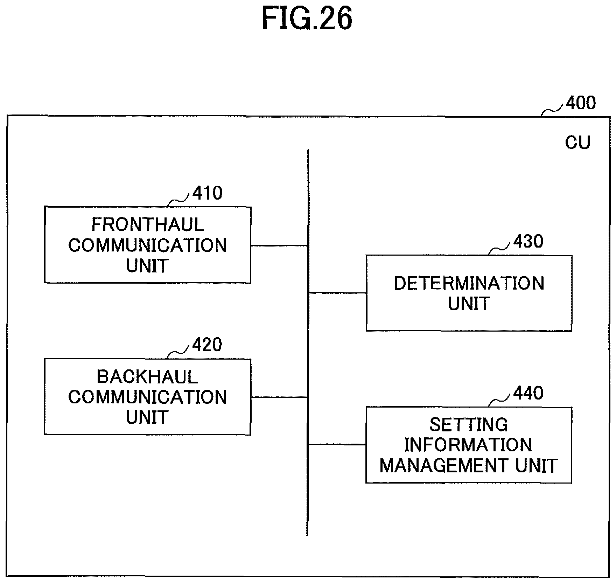

FIG. 26 illustrates a functional configuration example of a CU 400. As illustrated in FIG. 26, the CU 400 has a fronthaul communication unit 410, a backhaul communication unit 420, a determination unit 430, and a setting information management unit 440. The fronthaul communication unit 410 has the same functions as the configuration information transmission unit 240 and the configuration information receiving unit 250. Note that a communication counterpart of the fronthaul communication unit 410 is a DU. The backhaul communication unit 420 has the same functions as the configuration information transmission unit 240 and the configuration information receiving unit 250. The determination unit 430 and the setting information management unit 440 each have the same functions as the determination unit 230 and the setting information management unit 260.

### HARDWARE CONFIGURATION

The block diagrams (FIGS. 25 and 26) used in the description of the above embodiment indicate blocks of functional units. These functional blocks (functional components) are implemented by any combination of hardware components or software components. The components for implementing respective functional blocks are not particularly specified. That is, the functional blocks may be implemented by one device physically and/or logically combining multiple elements or may be implemented by two or more physically and/or logically separated devices that are connected directly and/or indirectly (e.g., wired and/or wireless).

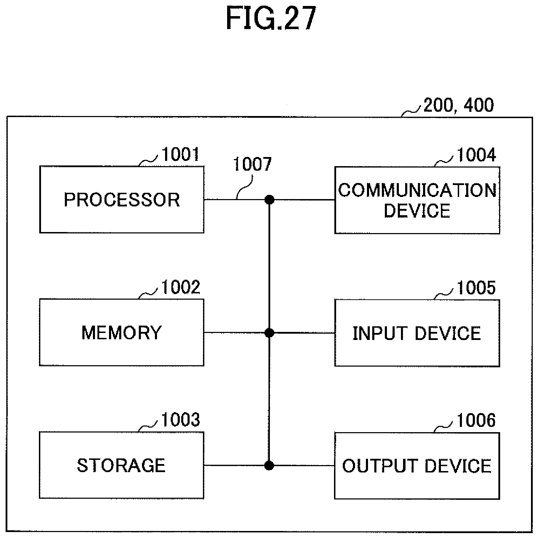

Further, each of the base station 200 and the CU 400 in one embodiment of the present invention may function as a computer that performs processing according to this embodiment. FIG. 27 is a diagram illustrating an example of a hardware configuration of the base station 200 and the CU 400 in an embodiment of the present invention. Each of the base station 200 and the CU 400 described above may be physically configured as a computer device including a processor 1001, a memory 1002, a storage 1003, a communication device 1004, an input device 1005, an output device 1006, and a bus 1007.

In the following description, the term "device" may be replaced with a circuit, an apparatus, a unit, or the like. The hardware configuration of the base station 200 and the CU 400 may be configured to include one or more of the respective devices illustrated with reference to 1001 to 1006 in FIG. 27 or may be configured without including some of the devices.

The functions of the base station 200 and the CU 400 are implemented by allowing predetermined software (programs) to be loaded on the hardware such as the processor 1001, the memory 1002, and the like, so as to cause the processor 1001 to perform calculations to control communications by the communication device 1004, and reading and/or writing of data in the storage 1003.

The processor 1001 may, for example, operate an operating system to control the entire computer. The processor 1001 may be configured to include a central processing unit (CPU) having an interface with peripherals, a control device, an operation device, and registers.

In addition, the processor 1001 loads programs (program codes), software modules or data from the storage 1003 and/or the communication device 1004 into the memory 1002, and executes various processes according to the loaded programs, software modules or data. The programs are configured to cause a computer to execute at least a part of the operations described in the above embodiment. For example, the signal transmission unit 210, the signal receiving unit 220, the configuration information transmission unit 240, the configuration information receiving unit 250 and the setting information management unit 260 of the base station 200 illustrated in FIG. 25 may be implemented by a control program that is stored in the memory 1002 and that operates on the processor 1001. For example, the fronthaul communication unit 410, the backhaul communication unit 420, the determination unit 430 and the setting information management unit 440 of the CU 400 illustrated in FIG. 26 may be implemented by a control program that is stored in the memory 1002 and that operates on the processor 1001. The above-described various processes described as being executed by one processor 1001; however, these processes may be executed simultaneously or sequentially by two or more processors 1001. The processor 1001 may be implemented by one or more chips. Note that the programs may be transmitted from the network via an electric communication line.

The memory 1002 may be a computer-readable recording medium composed of at least one of a ROM (Read Only Memory), an EPROM (Erasable Programmable ROM), an EEPROM (Electrically Erasable Programmable ROM), a RAM (Random Access Memory) and the like. The memory 1002 may be referred to as a register, a cache, a main memory (a main storage device), or the like. The memory 1002 may store executable programs (program codes), software modules, and the like for implementing a process according to the embodiment of the present invention.

The storage 1003 is a computer-readable recording medium composed, for example, of at least one of an optical disk such as a CD-ROM (Compact Disk ROM), a hard disk drive, a flexible disk, a magneto-optical disk (e.g., a compact disk, a digital versatile disk, and a Blu-ray (registered trademark) disk), a smart card, a flash memory (e.g., a card, a stick, and a key drive), a floppy (registered trademark) disk, and a magnetic strip. The storage 1003 may be referred to as an auxiliary storage device. The above-described storage medium may be, for example, a database, a server, or another appropriate medium including the memory 1002 and/or the storage 1003.

The communication device 1004 is hardware (a transmitting-receiving device) for performing communications between computers via a wired and/or wireless network. The communication device 1004 may also be referred to as a network device, a network controller, a network card, a communication module, or the like. For example, the signal transmission unit 210, the signal receiving unit 220, the configuration information transmission unit 240, and the configuration information receiving unit 250 of the base station 200 may be implemented by the communication device 1004. Further, the fronthaul communication unit 410 and the backhaul communication unit 420 of the CU 400 may be implemented by the communication device 1004.

The input device 1005 is configured to receive an input from the outside. Examples of the input device include a keyboard, a mouse, a microphone, a switch, a button, and a sensor. The output device 1006 is configured to generate an output to the outside. Examples of the output device include a display, a speaker, and an LED lamp. Note that the input device 1005 and the output device 1006 may be integrated (e.g., a touch panel).

In addition, the respective devices such as the processor 1001 and the memory 1002 may be connected by a bus 1007 for mutually communicating information with one another. The bus 1007 may be composed of a single bus or may be composed of different buses between the devices.

Further, the CU 400 or the base station 200 may include hardware such as a microprocessor, a digital signal processor (DSP), an ASIC (Application Specific Integrated Circuit), a PLD (Programmable Logic Device), and an FPGA (Field Programmable Gate Array). Alternatively, a part or all of the functional blocks of the user apparatus UE or the base station eNB may be implemented by those hardware components. For example, the processor 1001 may be implemented with at least one of these hardware components.

### SUMMARY OF EMBODIMENTS

As described above, an aspect of an embodiment may provide a base station used as a first base station in a radio communication system including the first base station and a second base station. The base station includes a determination unit configured to determine a transmission direction configuration in a time segment having predetermined duration; and a configuration information transmission unit configured to periodically or aperiodically transmit information indicating the transmission direction configuration determined by the determination unit to the second base station.

According to the above-described configuration, a technology for enabling a base station to indicate a transmission direction configuration to another base station is provided.

The time segment having the predetermined duration may be a radio frame having a plurality of slots, and the configuration information transmission unit may transmit information on a transmission direction configuration indicating a transmission direction of each slot in the plurality of slots to the second base station as information indicating the transmission direction configuration; or the time segment having the predetermined duration may be a slot having a plurality of symbols, and the configuration information transmission unit may transmit information on a transmission direction configuration indicating a transmission direction of each symbol in the plurality of symbols to the second base station as information indicating the transmission direction configuration. According to the above-described configuration, information indicating the transmission direction configuration may be transmitted with a relatively small overhead.

The time segment having the predetermined duration may be a radio frame having a plurality of slots, and the configuration information transmission unit may transmit information corresponding to a transmission direction of a specific one of slots in the radio frame or transmission directions of a plurality of slots in the radio frame to the second base station as information indicating the transmission direction configuration; or the time segment having the predetermined duration may be a slot having a plurality of symbols, and the configuration information transmission unit may transmit information corresponding to a transmission direction of a specific one of symbols in the slot or transmission directions of a plurality of symbols in the slot to the second base station as information indicating the transmission direction configuration. According to the above-described configuration, information indicating the transmission direction configuration may be transmitted flexibly.

The time segment having the predetermined duration may be a radio frame having a plurality of slots, and the configuration information transmission unit may transmit type information of a specific slot or a plurality of slots in the radio frame to the second base station as information indicating the transmission direction configuration; or the time segment having the predetermined duration may be a slot having a plurality of symbols, and the configuration information transmission unit transmits type information of a specific symbol or a plurality of symbols in the slot to the second base station as information indicating the transmission direction configuration, where the type information may be information indicating that the slot or the symbol has a fixed transmission direction or a flexible transmission direction. According to the above-described configuration, even when DL/UL is not determined, type information may be transmitted.

The configuration information transmission unit may transmit information indicating a transmission direction and information indicating a beam as the information indicating the transmission direction configuration to the second base station. According to the above-described configuration, the receiving end may perform interference control in view of the beam direction of the adjacent cell.

### SUPPLEMENTARY DESCRIPTION OF EMBODIMENTS

The embodiments have been described as described above; however, the disclosed invention is not limited to these embodiments, and a person skilled in the art would understand various variations, modifications, replacements, or the like. Specific examples of numerical values have been used for encouraging understanding of the present invention; however, these numeric values are merely examples and, unless otherwise noted, any appropriate values may be used. In the above description, partitioning of items is not essential to the present invention. Matters described in more than two items may be combined if necessary. Matters described in one item may be applied to matters described in another item (as long as they do not conflict). In a functional block diagram, boundaries of functional units or processing units do not necessarily correspond to physical boundaries of parts. Operations of multiple functional units may be physically performed in a single part, or operations of a single functional unit may be physically performed by multiple parts. The order of steps in the above described operating procedures according to an embodiment may be changed as long as there is no contradiction. For the sake of convenience, the base station 200 and the CU 400 have been described by using functional block diagrams. These apparatuses may be implemented by hardware, by software, or by combination of both. The software which is executed by a processor included in the user apparatus 100 according to an embodiment and the software which is executed by a processor included in the base station 200 may be stored in a random access memory (RAM), a flash memory, a read-only memory (ROM), an EPROM, an EEPROM, a register, a hard disk drive (HDD), a removable disk, a CD-ROM, a database, a server, or any other appropriate recording medium.

Further, reporting of information is not limited to the aspects/embodiments described in this specification, and may be performed in other ways. For example, reporting of information may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block) and SIB (System Information Block)), and other signals or a combination thereof. Further, RRC signaling may be referred to as an RRC message, and may be an RRC connection setup (RRCC connection setup) message, an RRC connection reconfiguration (RRCC connection registration) message, or the like.

Each aspect/embodiment described herein may be applied to LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA 2000, UMB (Ultra Mobile Broadband), IEEE 802.11 (Wi-Fi), IEEE 802.16 (WiMAX), IEEE 802.20, UWB (Ultra-Wide Band), Bluetooth (registered trademark), and a system that utilize other suitable systems and/or a next generation system expanded based on such a system.

The order of processes, sequences, flowcharts, etc. of each aspect/embodiment described in the present specification may be exchanged as long as there is no inconsistency. For example, for the methods described herein, elements of the various steps are presented in an exemplary order and are not limited to the specific order presented.

The specific operation that is performed by the base station 200 in this specification may be performed by its upper node in some cases. In a network composed of one or more network nodes having a base station 10, it is clear that the various operations performed for communication with the user apparatus may be performed by the base station and/or network nodes other than the base station. Examples of such other network nodes include, but are not limited to, MME or S-GW. In the above embodiments, a case where there is one network node other than the base station is described; however, a plurality of other network nodes other than the base station may be combined (e.g., MME and S-GW).

Aspects/embodiments described in this specification may be used alone or in combination, or may be switched in accordance with execution.

The user apparatus may also be referred to, by those skilled in the art, as a subscriber station, a mobile unit, a subscriber unit, a wireless unit, a remote unit, a mobile device, a wireless device, a wireless communication device, a remote device, a mobile subscriber station, a access terminal, a mobile computer, a wireless terminal, a remote terminal, a mobile subscriber station, a access terminal, a mobile computer, a wireless terminal, a remote terminal, a handset, a user agent, a mobile client, a client, or several other suitable terms.

The base station may also be referred to, by those skilled in the art, as NB (Node B), eNB (enhanced Node B), Base Station, gNB, or several other suitable terms.

As used herein, the terms "determining" and "deciding" may encompass a wide variety of actions. The terms "determining" and "deciding" may be deemed to include, for example, judging, calculating, computing, processing, deriving, investigating, looking up (e.g., searching tables, databases or other data structures), and ascertaining. Further, the terms "determining" and "deciding" may be deemed to include, for example, receiving (e.g., receiving information), transmitting (e.g., transmitting information), input, output, and accessing (e.g., accessing data in memory). Moreover, the terms "determining" and "deciding", may be deemed to include, for example, resolving, selecting, choosing, establishing, and comparing (comparing). In other words, the terms "determining" and "deciding" may be deemed to include, "determining" and "deciding" to take some action.

As used herein, the phrase "based on" does not mean "based only on" unless explicitly stated otherwise. In other words, the phrase "based on" means both "based only on" and "based at least on".

As long as "include", "including", and variations thereof are used in the specification or claims, these terms are intended to be inclusive in a manner similar to the term "comprising". Furthermore, the term "or" used in the specification or claims is intended to be not an exclusive "or".

In the entirety of the present disclosure, articles, such as a, an, or the in English that are added to a noun term by translation may indicate a plurality of the noun terms unless the articles obviously indicate a singular noun from the context.

The present invention has been described in detail above; it will be obvious to those skilled in the art that the present invention is not limited to the embodiments described herein. The present invention may be implemented as revised and modified embodiments without departing from the spirit and scope of the present invention as defined by the scope of the claims. Therefore, the present specification is described for the purpose of illustrating examples and does not have any restrictive meaning to the present invention.

### DESCRIPTION OF REFERENCE SIGNS

- 100: user apparatus
- 200, 300: base station
- 400: CU
- 210: signal transmission unit
- 220: signal receiving unit
- 230: determination unit
- 240: configuration information transmission unit
- 250: configuration information receiving unit
- 260: setting information management unit
- 410: fronthaul communication unit
- 420: backhaul communication unit
- 430: determination unit
- 440: setting information management unit
- 1001: processor
- 1002: memory
- 1003: storage
- 1004: communication device
- 1005: input device
- 1006: output device

## Claims

1. A base station used as a first base station in a radio communication system including the first base station and a second base station, the base station comprising:
a determination unit configured to determine a transmission direction configuration in a time segment having predetermined duration; and
a configuration information transmission unit configured to periodically or aperiodically transmit information indicating the transmission direction configuration determined by the determination unit to the second base station.

2. The base station according to claim 1, wherein
the time segment having the predetermined duration is a radio frame having a plurality of slots, and
the configuration information transmission unit transmits information on a transmission direction configuration indicating a transmission direction of each slot in the plurality of slots to the second base station as information indicating the transmission direction configuration, or wherein
the time segment having the predetermined duration is a slot having a plurality of symbols, and
the configuration information transmission unit transmits information on a transmission direction configuration indicating a transmission direction of each symbol in the plurality of symbols to the second base station as information indicating the transmission direction configuration.

3. The base station according to claim 1, wherein
the time segment having the predetermined duration is a radio frame having a plurality of slots, and
the configuration information transmission unit transmits information corresponding to a transmission direction of a specific slot or a plurality of slots in the radio frame to the second base station as information indicating the transmission direction configuration, or wherein
the time segment having the predetermined duration is a slot having a plurality of symbols, and
the configuration information transmission unit transmits information corresponding to a transmission direction of a specific symbol or a plurality of symbols in the slot to the second base station as information indicating the transmission direction configuration.

4. The base station according to claim 1, wherein
the time segment having the predetermined duration is a radio frame having a plurality of slots, and
the configuration information transmission unit transmits type information of a specific slot or a plurality of slots in the radio frame to the second base station as information indicating the transmission direction configuration, or wherein
the time segment having the predetermined duration is a slot having a plurality of symbols, and
the configuration information transmission unit transmits type information of a specific symbol or a plurality of symbols in the slot to the second base station as information indicating the transmission direction configuration, and wherein
the type information is information indicating that the slot or the symbol has a fixed transmission direction or a flexible transmission direction.

5. The base station according to any one of claims 1 to 4, wherein
the configuration information transmission unit transmits information indicating a transmission direction and information indicating a beam, as the information indicating the transmission direction configuration, to the second base station.

6. A configuration information transmission method performed by a first base station in a radio communication system including the first base station and a second base station, the configuration information transmission method comprising:
determining a transmission direction configuration in a time segment having predetermined duration; and
periodically or aperiodically transmitting information indicating the transmission direction configuration determined in the determining to the second base station.
